(19) **Europäisches Patentamt / European Patent Office / Office européen des brevets**

(11) **EP 3 943 458 A1**

(12) **EUROPEAN PATENT APPLICATION**
published in accordance with Art. 153(4) EPC

(43) Date of publication:
**26.01.2022 Bulletin 2022/04**

(21) Application number: **19920037.9**

(22) Date of filing: **10.10.2019**

(51) International Patent Classification (IPC):
**C03C 3/21** (2006.01)    **C03C 3/062** (2006.01)
**C03C 3/064** (2006.01)    **C03C 3/066** (2006.01)
**G02B 1/00** (2006.01)

(52) Cooperative Patent Classification (CPC):
**C03C 3/062; C03C 3/064; C03C 3/066; C03C 3/21; G02B 1/00**

(86) International application number:
**PCT/JP2019/039991**

(87) International publication number:
**WO 2020/188868 (24.09.2020 Gazette 2020/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.03.2019  JP 2019049677**

(71) Applicant: **Hikari Glass Co., Ltd.**
**Yuzawa-shi, Akita 012-0104 (JP)**

(72) Inventor: **IGUCHI, Noriaki**
**Yuzawa-shi, Akita 012-0104 (JP)**

(74) Representative: **Viering, Jentschura & Partner mbB**
**Patent- und Rechtsanwälte**
**Grillparzerstraße 14**
**81675 München (DE)**

(54) **OPTICAL GLASS, OPTICAL ELEMENT, OPTICAL SYSTEM, INTERCHANGEABLE LENS, AND OPTICAL DEVICE**

(57) The present disclosure provides an optical glass including, by mass%, 27 to 41% of a $P_2O_5$ component, 7 to 17% of a $Na_2O$ component, 5 to 10% of a $K_2O$ component, 8 to 26% of a $TiO_2$ component, and 5 to 39% of a $Nb_2O_5$ component, wherein a partial dispersion ratio $(P_{g,F})$ is equal to or less than 0.635.

FIG. 1

**Description**

Technical Field

The present invention relates to an optical glass, an optical element, an optical system, an interchangeable lens, and an optical device. The present invention claims priority to Japanese Patent Application No. 2019-049677, filed on March 18, 2019, the contents of which are incorporated by reference herein in its entirety in designated states where the incorporation of documents by reference is approved.

Background Art

For example, an optical glass described in PTL 1 has been known as an optical glass usable in imaging equipment and the like. In recent years, imaging equipment and the like including an image sensor with a large number of pixels have been developed, and an optical glass that is highly dispersive and has low specific gravity has been demanded as an optical glass to be used for such equipment. In order to obtain glass having excellent stria quality, an optical glass having a composition having a low liquid phase temperature has been demanded.

Citation List

Patent Literature

PTL 1: JP 2011-144064 A

Summary of Invention

A first aspect according to the present invention is an optical glass including, by mass%, 27 to 41% of a $P_2O_5$ component, 7 to 17% of a $Na_2O$ component, 5 to 10% of a $K_2O$ component, 8 to 26% of a $TiO_2$ component, and 5 to 39% of a $Nb_2O_5$ component, wherein a partial dispersion ratio ($P_{g,F}$) is equal to or less than 0.635.
A second aspect according to the present invention is an optical element using the optical glass described above.
A third aspect according to the present invention is an optical system including the optical element described above.
A fourth aspect according to the present invention is an interchangeable lens including the optical system described above.
A fifth aspect according to the present invention is an optical device including the optical system described above.

Brief Description of Drawings

FIG. 1 is a perspective view of an imaging device including an optical element using an optical glass according to the present embodiment.
FIG. 2 is a front view of another example of the imaging device including the optical element using the optical glass according to the present embodiment.
FIG. 3 is a rear view of the imaging device in FIG. 2.
FIG. 4 is a block diagram illustrating an example of a configuration of a multi-photon microscope according to the present embodiment.
FIG. 5 is a graph in which an optical constant value of each example is plotted.

Description of Embodiments

Hereinafter, description is made on an embodiment of the present invention (hereinafter, referred to as the "present embodiment"). The present embodiment described below is an example for describing the present invention, and is not intended to limit the present invention to the contents described below. The present invention may be modified as appropriate and carried out without departing from the gist thereof.
In the present specification, a content amount of each of all components is expressed with mass% (mass percentage) with respect to the total weight of glass in terms of an oxide-converted composition unless otherwise stated. Assuming that oxides, complex salt, and the like, which are used as raw materials as glass constituent components in the present embodiment, are all decomposed and turned into oxides at the time of melting, the oxide-converted composition described herein is a composition in which each component contained in the glass is expressed with a total mass of the oxides as 100 mass%.

An optical glass according to the present embodiment includes, by mass%, 27 to 41% of a $P_2O_5$ component, 7 to 17% of a $Na_2O$ component, 5 to 10% of a $K_2O$ component, 8 to 26% of a $TiO_2$ component, and 5 to 39% of a $Nb_2O_5$ component, wherein a partial dispersion ratio ($P_{g,F}$) is equal to or less than 0.635.

Hitherto, a method of increasing a content amount of a component such as $TiO_2$ and $Nb_2O_5$ has been attempted in order to achieve high dispersion. However, when the content amounts of those are increased, reduction of a transmittance and increase of specific gravity are liable to be caused. At this viewpoint, the optical glass according to the present embodiment can be highly dispersive and can be reduced in specific gravity. Thus, a light-weighted lens can be achieved. The optical glass according to the present embodiment has an excellent liquid phase temperature and can suppress occurrence of a stria, and can thus achieve high productivity.

First, description is made on each component of the optical glass according to the present embodiment.

$P_2O_5$ is a component that forms a glass frame, improves devitrification resistance, reduces a refractive index, and degrades chemical durability. When the content amount of $P_2O_5$ is excessively reduced, devitrification is liable to be caused. When the content amount of $P_2O_5$ is excessively increased, a refractive index is liable to be reduced, and chemical durability is liable to be degraded. From such a viewpoint, the content amount of $P_2O_5$ is from 27% to 41%. A lower limit of this content amount is preferably 27.5% or more, more preferably 28% or more. An upper limit of this content amount is preferably 39% or less, more preferably 38% or less. When the content amount of $P_2O_5$ falls within such a range, devitrification resistance can be improved, chemical durability can be satisfactory, and a refractive index can be increased.

$Na_2O$ is a component that improves meltability and degrades chemical durability. $Na_2O$ is also a component that reduces a $P_{g,F}$ value. When the content amount of $Na_2O$ is excessively reduced, meltability is liable to be degraded. From such a viewpoint, the content amount of $Na_2O$ is from 7% to 17%. A lower limit of this content amount is preferably 7.5% or more, more preferably 8% or more. An upper limit of this content amount is preferably 16% or less, more preferably 15% or less, further preferably 14% or less.

$K_2O$ is a component that improves meltability and degrades chemical durability. $K_2O$ is also a component that increases a $P_{g,F}$ value. When the content amount of $K_2O$ is excessively reduced, meltability is liable to be degraded. From such a viewpoint, the content amount of $K_2O$ is from 5% to 10%. A lower limit of this content amount preferably exceeds 5%, is more preferably 5.5% or more, further preferably 6% or more. An upper limit of this content amount is preferably 9.5% or less, more preferably 9% or less.

$TiO_2$ is a component that increases a refractive index and reduces a transmittance. $TiO_2$ is also a component that increases a $P_{g,F}$ value. When the content amount of $TiO_2$ is increased, a transmittance is liable to be degraded. From such a viewpoint, the content amount of $TiO_2$ is from 8% to 26%. A lower limit of this content amount is preferably 8.5% or more, more preferably 9% or more, further preferably 10% or more. An upper limit of this content amount is preferably 24% or less, more preferably 23% or less, further preferably 21% or less.

$Nb_2O_5$ is a component that increases a refractive index, improves dispersibility, and reduces a transmittance. $Nb_2O_5$ is also a component that increases a $P_{g,F}$ value. When the content amount of $Nb_2O_5$ is reduced, a refractive index is liable to be reduced. When the content amount of $Nb_2O_5$ is increased, a transmittance is liable to be degraded. From such a viewpoint, the content amount of $Nb_2O_5$ is from 5% to 39%. A lower limit of this content amount is preferably 6% or more, more preferably 7% or more, further preferably 8% or more. An upper limit of this content amount is preferably 38% or less, more preferably 37% or less, further preferably 35% or less.

Furthermore, the optical glass according to the present embodiment may further include one or more kinds selected from a group consisting of $SiO_2$, $B_2O_3$, $Al_2O_3$, $Li_2O$, $CaO$, $BaO$, $ZnO$, $ZrO_2$, $Y_2O_3$, $Gd_2O_3$, $WO_3$, and $Sb_2O_3$.

$SiO_2$ is a component effective for a constant adjustment, and, from a viewpoint of further improving devitrification resistance, an upper limit of this content amount is preferably 3% or less, more preferably 2.5% or less, further preferably 2% or less. A lower limit of this content amount preferably exceeds 0%.

$B_2O_3$ is a component effective for a constant adjustment, and is also a component that increases viscosity. $B_2O_3$ is also a component that deteriorates (increases a value of) a liquid phase temperature when being contained in a certain ratio or more. An upper limit of this content amount is preferably less than 4%, more preferably 3.8% or less, further preferably 3.7% or less. A lower limit of this content amount preferably exceeds 0%.

$Al_2O_3$ is a component that improves chemical durability, but degrades devitrification resistance, and deteriorates (increases a value of) a liquid phase temperature when being contained in a certain ratio or more. $Al_2O_3$ is also a component that increases a $P_{g,F}$ value and viscosity. An upper limit of this content amount is preferably 3% or less, more preferably 2.5% or less, further preferably 2% or less. A lower limit of this content amount preferably exceeds 0%.

$Li_2O$ is a component that improves meltability and increases a refractive index. From a viewpoint of further improving devitrification resistance, an upper limit of this content amount is preferably 3.5% or less, more preferably 3% or less, further preferably 2% or less. A lower limit of this content amount preferably exceeds 0%.

$CaO$ is a component effective for increasing a refractive index, and, from a viewpoint of further improving devitrification resistance, an upper limit of this content amount is preferably 9.5% or less, more preferably 9% or less, further preferably 8% or less. A lower limit of this content amount preferably exceeds 0%.

BaO is a component effective for increasing a refractive index, and, from a viewpoint of further improving devitrification resistance, an upper limit of this content amount is preferably 9% or less, more preferably 8.5% or less, further preferably 8% or less. A lower limit of this content amount preferably exceeds 0%.

ZnO is a component effective for increasing a refractive index and dispersion, and is also a component that increases a $P_{g,F}$ value. From a viewpoint of further improving devitrification resistance, an upper limit of this content amount is preferably 3% or less, more preferably 2% or less, further preferably 1.5% or less. A lower limit of this content amount preferably exceeds 0%.

$ZrO_2$ is a component effective for increasing a refractive index and dispersion, and, from a viewpoint of further improving devitrification resistance, an upper limit of this content amount is preferably 3% or less, more preferably 2% or less, further preferably 1.5% or less. A lower limit of this content amount preferably exceeds 0%.

$Y_2O_3$ is a component effective for increasing a refractive index, and, from a viewpoint of further improving devitrification resistance, an upper limit of this content amount is preferably 3% or less, more preferably 2% or less, further preferably 1% or less. A lower limit of this content amount preferably exceeds 0%.

$Gd_2O_3$ is a component effective for increasing a refractive index, and, from a viewpoint of further improving devitrification resistance, an upper limit of this content amount is preferably 3% or less, more preferably 2.5% or less, further preferably 2% or less. A lower limit of this content amount preferably exceeds 0%.

The content amount of $WO_3$ is a component effective for increasing a refractive index and dispersion, and is also a component that increases a $P_{g,F}$ value. However, since $WO_3$ is an expensive raw material, an upper limit of this content amount is preferably 3% or less, more preferably 2.5% or less, further preferably 2% or less. A lower limit of this content amount preferably exceeds 0%.

$Sb_2O_3$ is effective as a defoaming agent, but deteriorates a transmittance property of glass when being contained in a certain amount or more. In order to improve the transmittance property of glass, an upper limit of this content amount is preferably 0.4% or less, more preferably 0.3% or less, further preferably 0.2% or less. A lower limit of this content amount preferably exceeds 0%.

The optical glass according to the present embodiment enables a content amount of $Ta_2O_5$ being an expensive raw material to be reduced, and further enables such material to be substantially excluded. Thus, the optical glass according to the present embodiment is also excellent in reduction of raw material cost. Here, "substantially excluded" in the present specification means that the component is not contained as a constituent component that affects a property of a glass composition beyond a concentration in which the component is inevitably contained as an impurity. For example, for contamination of about 100 ppm or less in a manufacturing process, a component is assumed to be substantially excluded.

A suitable combination is as follows: a $SiO_2$ component: 0 to 3%, a $B_2O_3$ component: 0 to less than 4%, an $Al_2O_3$ component: 0 to 3%, a $Li_2O$ component: 0 to 3.5%, a CaO component: 0 to 9.5%, a BaO component: 0 to 9%, a ZnO component: 0 to 3%, a $ZrO_2$ component: 0 to 3%, a $Y_2O_3$ component: 0 to 3%, a $Gd_2O_3$ component: 0 to 3%, a $WO_3$ component: 0 to 3%, and a $Sb_2O_3$ component: 0 to 0.4%.

In addition, the following suitable examples are further exemplified for combinations and proportions of components.

The sum of the content amounts of $P_2O_5$ and $B_2O_3$ ($P_2O_5 + B_2O_3$) is preferably from 28% to 44%. A lower limit of the sum of these content amounts is more preferably 28.5% or more, further preferably 29% or more. An upper limit of the sum of these content amounts is more preferably 43% or less, further preferably 42.5% or less. When $P_2O_5 + B_2O_3$ falls within such a range, a refractive index can be further increased.

A ratio of $B_2O_3$ to $P_2O_5$ ($B_2O_3/P_2O_5$) is preferably equal to or more than 0 to less than 0.15. A lower limit of this ratio is more preferably 0.015 or more, further preferably 0.02 or more.
An upper limit of this ratio is more preferably 0.135 or less, further preferably 0.13 or less. When $B_2O_3/P_2O_5$ falls within such a range, devitrification resistance can be further increased, and a refractive index can be further increased.

A ratio of $TiO_2$ to $P_2O_5$ ($TiO_2/P_2O_5$) is preferably from 0.28 to 0.7. A lower limit of the ratio is more preferably 0.3 or more, further preferably 0.4 or more. An upper limit of this ratio is more preferably 0.68 or less, further preferably 0.66 or less. When $TiO_2/P_2O_5$ falls within such a range, a high $P_{g,F}$ value and a high refractive index can be achieved.

A ratio of $Nb_2O_5$ to $P_2O_5$ ($Nb_2O_5/P_2O_5$) is preferably from 0.18 to 1.3. A lower limit of this ratio is more preferably 0.19 or more, further preferably 0.2 or more. An upper limit of this ratio is more preferably 1.28 or less, further preferably 1.26 or less. When $Nb_2O_5/P_2O_5$ falls within such a range, a high $P_{g,F}$ value and a high refractive index can be achieved.

The sum of the content amounts of $Li_2O$, $Na_2O$, and $K_2O$ ($Li_2O + Na_2O + K_2O$) is preferably from 15% to 26%. A lower limit of the sum of these content amounts is more preferably 16% or more, further preferably 17% or more. An upper limit of the sum of these content amounts is more preferably 25% or less, further preferably 24% or less. When $Li_2O + Na_2O + K_2O$ falls within such a range, meltability can be improved without degrading chemical durability.

A ratio of the sum of the content amounts of the $TiO_2$ component and the $Nb_2O_5$ component to the $P_2O_5$

component (($TiO_2$ + $Nb_2O_5$) /$P_2O_5$) is preferably from 0.5 to 2.0. A lower limit of this ratio is more preferably 0.6 or more, further preferably 0.7 or more. An upper limit of this ratio is more preferably 1.8 or less, further preferably 1.7 or less. When ($TiO_2$ + $Nb_2O_5$)/$P_2O_5$ falls within such a range, a $P_{g,F}$ value can be increased without increasing a refractive index.

A ratio of the $K_2O$ component to the $Na_2O$ component ($K_2O$/$Na_2O$) is preferably 0.3 to 1.1. A lower limit of this ratio is more preferably 0.32 or more, further preferably 0.33 or more. An upper limit of this ratio is more preferably 1.0 or less, further preferably 0.99 or less. When $K_2O$/$Na_2O$ falls within such a range, a low liquid phase temperature can be achieved.

Note that, for the purpose of, for example, performing fine adjustments of fining, coloration, decoloration, and optical constants, a known component such as a fining agent, a coloring agent, a defoaming agent, and a fluorine compound may be added by an appropriate amount to the glass composition as needed. In addition to the above-mentioned components, other components may be added as long as the effect of the optical glass according to the present embodiment can be exerted.

A method of manufacturing the optical glass according to the present embodiment is not particularly limited, and a publicly known method may be adopted. Further, public conditions can be selected for the manufacturing conditions as appropriate. As one of the suitable examples, there is a method including a process of selecting, as a glass raw material, one kind selected from oxides, hydroxides, phosphate compounds (such as phosphates and orthophosphates), sulfates, carbonates, nitrates, and the like corresponding to each of the components described above, mixing the glass raw material, melting the glass raw material at a temperature of 1,100 to 1,400 degrees Celsius, and stirring the glass raw material to be uniformed, and a process of then cooling and molding the glass raw material.

More specifically, there may be adopted a manufacturing method in which raw materials such as oxides, hydroxides, phosphate compounds, sulfates, carbonates, and nitrates are blended to obtain a target composition, melted at a temperature of preferably from 1,100 to 1,400 degrees Celsius, more preferably from 1,100 to 1,300 degrees Celsius, further preferably 1,100 to 1,250 degrees Celsius, uniformed by stirring, subjected to defoaming, then poured in a mold, and molded. The optical glass thus obtained is processed to have a desired shape by performing re-heat pressing or the like as needed, and is subjected to polishing. With this, a desired optical glass and a desired optical element can be obtained.

A composition of the optical glass according to the present embodiment is easily melted, and thus the optical glass is easily uniformed by stirring, and has excellent production efficiency.

In other words, time until 50g of a raw material of the optical glass is melted when the raw material is heated at a temperature of 1,100 to 1,250 degrees Celsius is preferably less than 15 minutes, more preferably 13 minutes or less, further preferably 10 minutes or less. Here, the "time until melting" refers to time from a point in time when heating retention starts for raw materials needed for a configuration of the optical glass until the raw materials are melted and cannot be visually confirmed near a liquid level.

Since a glass raw material is melted in the short time as described above within a temperature range of 1,100 to 1,250 degrees Celsius, a remaining glass raw material mixing into glass can be suppressed. When heating at a high temperature or heating retention for a long time is performed in order to force a remaining glass raw material to be melted, a decrease in production efficiency of the glass and reduction of a transmittance of the glass may be caused, but such a malfunction does not occur in the present embodiment.

A high-purity material with a small content amount of impurities is preferably used as the raw material. The high-purity material indicates a material including 99.85 mass% or more of a concerned component. By using the high-purity material, an amount of impurities is reduced, and hence an inner transmittance of the optical glass is likely to be increased.

Next, description is made on physical properties of the optical glass according to the present embodiment.

A partial dispersion ratio ($P_{g,F}$) of the optical glass according to the present embodiment is 0.635 or less. The optical glass according to the present embodiment achieves a great partial dispersion ratio ($P_{g,F}$), and is thus effective for correcting aberration of a lens. From such a viewpoint, a lower limit of the partial dispersion ratio ($P_{g,F}$) of the optical glass according to the present embodiment is preferably 0.6 or more, more preferably 0.610 or more, further preferably 0.615 or more. An upper limit of the partial dispersion ratio ($P_{g,F}$) is more preferably 0.634 or less, further preferably 0.633 or less.

From a viewpoint of reduction in thickness of the lens, the optical glass according to the present embodiment preferably has a high refractive index (a refractive index ($n_d$) is large). However, in general, as the refractive index is higher, the specific gravity is liable to be increased. In view of such a circumstance, the refractive index ($n_d$) of the optical glass according to the present embodiment with respect to a d-line preferably falls within a range from 1.66 to 1.80. A lower limit of the refractive index ($n_d$) is more preferably 1.67 or more, further preferably 1.68 or more. An upper limit of the refractive index ($n_d$) is more preferably 1.78 or less, further preferably 1.77 or less.

An abbe number ($v_d$) of the optical glass according to the present embodiment preferably falls within a range from 22 to 32. A lower limit of the abbe number ($v_d$) is more preferably 23 or more, further preferably 24 or more. An upper limit of the abbe number ($v_d$) is more preferably 31 or less, further preferably 28 or less.

With regard to the optical glass according to the present embodiment, a preferable combination of the refractive index ($n_d$) and the abbe number ($\nu_d$) is the refractive index ($n_d$) falling within a range from 1.66 to 1.80 and the abbe number ($\nu_d$) falling within a range from 22 to 32. An optical system in which chromatic aberration and other aberrations are satisfactorily corrected can be designed by, for example, combining the optical glass according to the present embodiment having such properties with other optical glasses, and using the optical glass as a convex lens in a concave lens group.

From a viewpoint of reduction in weight of the lens, the optical glass according to the present embodiment preferably has low specific gravity. However, in general, as the specific gravity is reduced, a refractive index is liable to be reduced.

In view of such a circumstance, suitable specific gravity ($S_g$) of the optical glass according to the present embodiment falls within a range with a lower limit of 2.8 and an upper limit of 3.4, i.e., from 2.8 to 3.4.

A value ($\Delta P_{g,F}$) indicating abnormal dispersibility of the optical glass according to the present embodiment is preferably 0.0180 to 0.0320. An upper limit of the value is more preferably 0.0315 or less, further preferably 0.0310 or less. A lower limit of the value is more preferably 0.0185 or more, further preferably 0.0200 or more. $\Delta P_{g,F}$ is an indicator of the abnormal dispersibility, and can be obtained in conformity with a method described in Examples described later.

A liquid phase temperature of the optical glass according to the present embodiment is preferably 1,050 degrees Celsius or less, more preferably 1,040 degrees Celsius or less, further preferably 1,030 degrees Celsius or less. With glass having this value, for example, the glass can be extracted at a low temperature from an extraction pipe during continuous dissolution, and thus occurrence of a stria can be suppressed and productivity can be increased. Since there is no need for increasing a dissolution temperature, occurrence of foreign matters due to a chemical reaction between glass and a dissolving tank can be suppressed, and dissolution that does not degrade a transmittance can be achieved.

From the above-mentioned viewpoint, the optical glass according to the present embodiment is low in a raw material cost, has a low specific gravity, and is highly dispersive (has a small abbe number ($\nu_d$)). A value ($\Delta P_{g,F}$) indicating abnormal dispersibility and a partial dispersion ratio ($P_{g,F}$) can also be increased. The optical glass according to the present embodiment is suitable as an optical element such as a lens included in an optical device such as a camera and a microscope. Such an optical element includes a mirror, a lens, a prism, a filter, and the like. Examples of an optical system including the optical element include, for example, an objective lens, a condensing lens, an image forming lens, and an interchangeable camera lens. The optical system can be used for an imaging device, such as a camera with an interchangeable lens and a camera with a non-interchangeable lens, and a microscope such as a multi-photon microscope. Note that, the optical device is not limited to the imaging device and the microscope described above, and also includes a video camera, a teleconverter, a telescope, a binocular, a monocular, a laser range finder, a projector, and the like. An example thereof will be described below.

<Imaging Device>

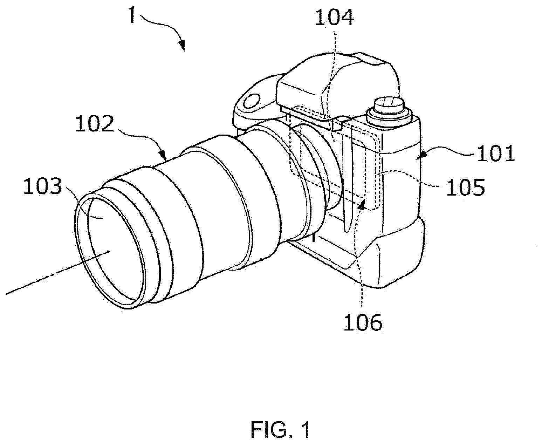

FIG. 1 is a perspective view of an imaging device including an optical element using the optical glass according to the present embodiment.

An imaging device 1 is a so-called digital single-lens reflex camera (a lens-interchangeable camera), and a photographing lens 103 (an optical system) includes an optical element including, as a base material, the optical glass according to the present embodiment. A lens barrel 102 is mounted to a lens mount (not illustrated) of a camera body 101 in a removable manner. An image is formed with light, which passes through the lens 103 of the lens barrel 102, on a sensor chip (solid-state imaging elements) 104 of a multi-chip module 106 arranged on a back surface side of the camera body 101. The sensor chip 104 is a so-called bare chip such as a CMOS image sensor, and the multi-chip module 106 is, for example, a Chip On Glass (COG) type module including the sensor chip 104 being a bare chip mounted on a glass substrate 105.

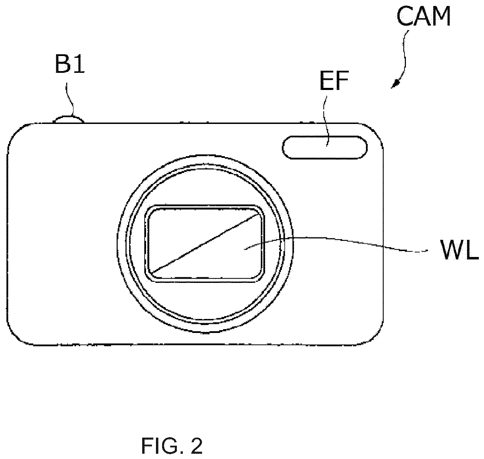

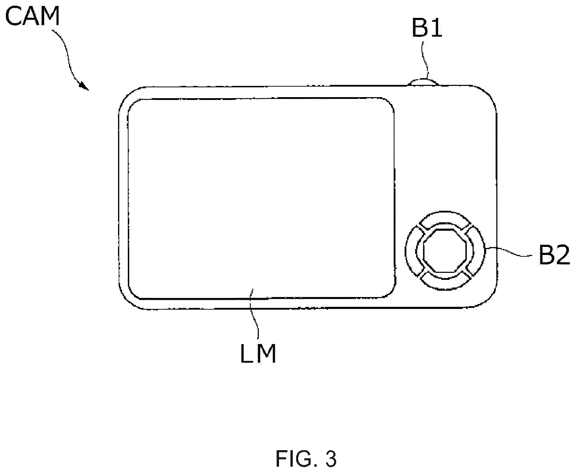

FIG. 2 is a front view of another example of the imaging device including the optical element using the optical glass according to the present embodiment. FIG. 3 is a rear view of the imaging device in FIG. 2.

The imaging device CAM is a so-called digital still camera (a fixed lens camera), and a photographing lens WL (an optical system) includes an optical element including, as a base material, the optical glass according to the present embodiment.

When a power button (not illustrated) of the imaging device CAM is pressed, a shutter (not illustrated) of the photographing lens WL is opened, light from an object to be imaged (a body) is converged by the photographing lens WL and forms an image on imaging elements arranged on an image surface. An object image formed on the imaging elements is displayed on a liquid crystal monitor LM arranged on the back of the imaging device CAM. A photographer decides composition of the object image while viewing the liquid crystal monitor LM, then presses down a release button B1, and captures the object image on the imaging elements. The object image is recorded and stored in a memory (not illustrated).

An auxiliary light emitting unit EF that emits auxiliary light in a case that the object is dark and a function button B2 to be used for setting various conditions of the imaging device CAM and the like are arranged on the imaging device CAM.

A higher resolution, lighter weight, and a smaller size are demanded for the optical system to be used in such a digital camera or the like. In order to achieve such demands, it is effective to use glass with a high refractive index as the optical system. Particularly, glass that achieves both a high refractive index and lower specific gravity ($S_g$) and has high press formability is highly demanded. From such a viewpoint, the optical glass according to the present embodiment is suitable as a member of such optical equipment. Note that, in addition to the imaging device described above, examples of the optical equipment to which the present embodiment is applicable include a projector and the like. In addition to the lens, examples of the optical element include a prism and the like.

<Multi-photon Microscope>

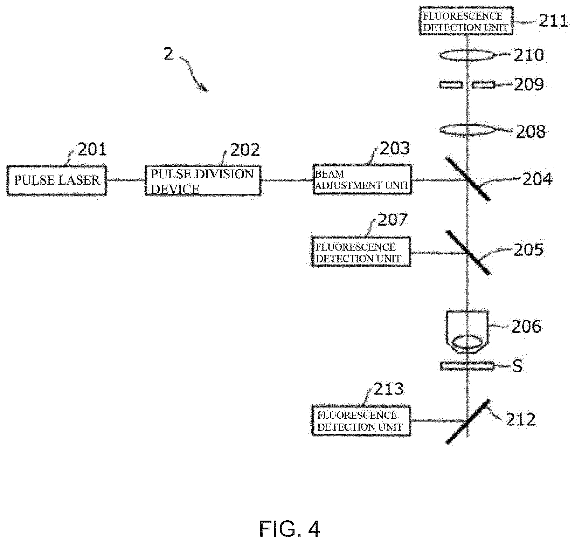

FIG. 4 is a block diagram illustrating an example of a configuration of a multi-photon microscope 2 including the optical element using the optical glass according to the present embodiment.

The multi-photon microscope 2 includes an objective lens 206, a condensing lens 208, and an image forming lens 210. At least one of the objective lens 206, the condensing lens 208, and the image forming lens 210 includes an optical element including, as a base material, the optical glass according to the present embodiment. Hereinafter, description is mainly made on the optical system of the multi-photon microscope 2.

A pulse laser device 201 emits ultrashort pulse light having, for example, a near infrared wavelength (approximately 1,000 nm) and a pulse width of a femtosecond unit (for example, 100 femtoseconds). In general, ultrashort pulse light immediately after being emitted from the pulse laser device 201 is linearly polarized light that is polarized in a predetermined direction.

A pulse division device 202 divides the ultrashort pulse light, increases a repetition frequency of the ultrashort pulse light, and emits the ultrashort pulse light.

A beam adjustment unit 203 has a function of adjusting a beam diameter of the ultrashort pulse light, which enters from the pulse division device 202, to a pupil diameter of the objective lens 206, a function of adjusting convergence and divergence angles of the ultrashort pulse light in order to correct chromatic aberration (a focus difference) on an axis of a wavelength of multi-photon excitation light emitted from a sample S and the wavelength of the ultrashort pulse light, a pre-chirp function (group velocity dispersion compensation function) providing inverse group velocity dispersion to the ultrashort pulse light in order to correct the pulse width of the ultrashort pulse light, which is increased due to group velocity dispersion at the time of passing through the optical system, and the like.

The ultrashort pulse light emitted from the pulse laser device 201 has a repetition frequency increased by the pulse division device 202, and is subjected to the above-mentioned adjustments by the beam adjustment unit 203. The ultrashort pulse light emitted from the beam adjustment unit 203 is reflected on a dichroic mirror 204 in a direction toward a dichroic mirror, passes through the dichroic mirror 205, is converged by the objective lens 206, and is radiated to the sample S. At this time, an observation surface of the sample S may be scanned with the ultrashort pulse light through use of scanning means (not illustrated).

For example, when the sample S is subjected to fluorescence imaging, a fluorescent pigment by which the sample S is dyed is subjected to multi-photon excitation in an irradiated region with the ultrashort pulse light and the vicinity thereof on the sample S, and fluorescence having a wavelength shorter than a infrared wavelength of the ultrashort pulse light (hereinafter, also referred to "observation light") is emitted.

The observation light emitted from the sample S in a direction toward the objective lens 206 is collimated by the objective lens 206, and is reflected on the dichroic mirror 205 or passes through the dichroic mirror 205 depending on the wavelength.

The observation light reflected on the dichroic mirror 205 enters a fluorescence detection unit 207. For example, the fluorescence detection unit 207 is formed of a barrier filter, a photo multiplier tube (PMT), or the like, receives the observation light reflected on the dichroic mirror 205, and outputs an electronic signal depending on an amount of the light. The fluorescence detection unit 207 detects the observation light over the observation surface of the sample S, in conformity with the ultrashort pulse light scanning on the observation surface of the sample S.

Meanwhile, the observation light passing through the dichroic mirror 205 is de-scanned by scanning means (not illustrated), passes through the dichroic mirror 204, is converged by the condensing lens 208, passes through a pinhole 209 provided at a position substantially conjugate to a focal position of the objective lens 206, passes through the image forming lens 210, and enters a fluorescence detection unit 211.

For example, the fluorescence detection unit 211 is formed of a barrier filter, a PMT, or the like, receives the observation light forming an image on a light formed by the image forming lens 210 reception surface of the fluorescence detection unit 211, and outputs an electronic signal depending on an amount of the light. The fluorescence detection unit 211 detects the observation light over the observation surface of the sample S, in conformity with the ultrashort pulse light scanning on the observation surface of the sample S.

Note that, all the observation light emitted from the sample S in a direction toward the objective lens 206 may be detected by the fluorescence detection unit 211 by excluding the dichroic mirror 205 from the optical path.

The observation light emitted from the sample S in a direction opposite to the objective lens 206 is reflected on a dichroic mirror 212, and enters a fluorescence detection unit 213. The fluorescence detection unit 213 is formed of, for example, a barrier filter, a PMT, or the like, receives the observation light reflected on the dichroic mirror 212, and outputs an electronic signal depending on an amount of the light. The fluorescence detection unit 213 detects the observation light over the observation surface of the sample S, in conformity with the ultrashort pulse light scanning on the observation surface of the sample S.

The electronic signals output from the fluorescence detection units 207, 211, and 213 are input to, for example, a computer (not illustrated). The computer is capable of generating an observation image, displaying the generated observation image, storing data on the observation image, based on the input electronic signals.

Examples

Next, description is made on Examples and Comparative Examples below, but the present invention is not limited at all by Examples below.

<Production of Optical Glasses>

The optical glasses in Examples and Comparative Examples were produced by the following procedures. First, glass raw materials selected from oxides, hydroxides, phosphate compounds (phosphates, orthophosphoric acids, and the like), sulphates, carbonates, nitrates, and the like were weighed so as to obtain the compositions (mass%) illustrated in each table. Next, the weighed raw materials were mixed and put in a platinum crucible, melted for about 70 minutes at a temperature of from 1,100 to 1,300 degrees Celsius, and uniformed by stirring. After defoaming, the resultant was lowered to an appropriate temperature, poured in a mold, annealed, and molded. In this manner, each sample was obtained.

1. Refractive Index ($n_d$) and Abbe Number ($\nu_d$)

The refractive index ($n_d$) and the abbe number ($\nu_d$) in each of the samples were measured and calculated through use of a refractive index measuring instrument (KPR-2000 manufactured by Shimadzu Device Corporation). $n_d$ indicates a refractive index of the glass with respect to light of a d-line (wavelength of 587.562 nm). $\nu_d$ was obtained based on Expression (1) given below. nc and $n_F$ indicate refractive indexes of the glass with respect to a Cline (wavelength of 656.273 nm) and an F-line (wavelength of 486.133 nm), respectively.

$$\nu_d = (n_d - 1)/(n_F - n_C) \quad \ldots \quad (1)$$

2. Partial Dispersion Ratio ($P_{g,F}$)

The partial dispersion ratio ($P_{g,F}$) in each of the samples indicates a ratio of partial dispersion ($n_g$ - $n_F$) to main dispersion ($n_F$ - $n_C$), and was obtained based on Expression (2) given below. $n_g$ indicates a refractive index of the glass with respect to a g-line (wavelength of 435.835 nm).

$$P_{g,F} = (n_g - n_F)/(n_F - n_C) \quad \ldots \quad (2)$$

3. Value Indicating Abnormal Dispersibility ($\Delta P_{g,F}$)

The value ($\Delta P_{g,F}$) indicating abnormal dispersibility in each of the samples was obtained in conformity with a method indicated below.

(1) Generation of Reference Line

First, as a normal partial dispersion glass, two glasses "F2" and "K7" having an abbe number ($\nu_d$) and a partial dispersion ratio ($P_{g,F}$) indicated below were used as reference materials. For each of the glasses, a horizontal axis indicates the abbe number ($\nu_d$), a vertical axis indicates the partial dispersion ratio ($P_{g,F}$), and a straight line connecting two points corresponding to the two reference materials is a reference line.

Property of glass "F2": $\nu_d$ = 36.33, $P_{g,F}$ = 0.5834
Property of glass "K7": $\nu_d$ = 60.47, $P_{g,F}$ = 0.5429

(2) Calculation of $\Delta P_{g,F}$

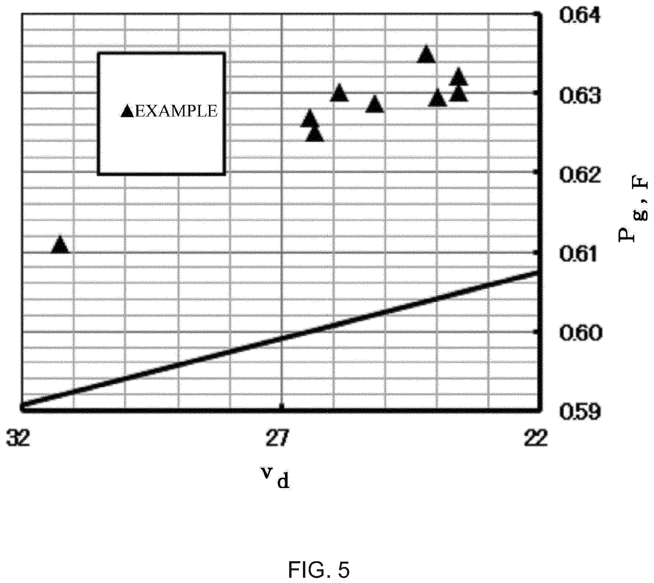

Next, a value corresponding to the optical glass in each of Examples was plotted on a graph whose horizontal axis indicates the abbe number ($\nu_d$) and vertical axis indicates the partial dispersion ratio ($P_{g,F}$) (see FIG. 5), and a difference between a point on the reference line corresponding to the abbe number ($\nu_d$) of the glass type described above and the value ($P_{g,F}$) of the vertical axis was calculated as a value ($\Delta P_{g,F}$) indicating abnormal dispersibility. Note that, when the partial dispersion ratio ($P_{g,F}$) was located on the upper side of the reference line, $\Delta P_{g,F}$ has a positive value, and when the partial dispersion ratio ($P_{g,F}$) is located on the lower side of the reference line, $\Delta P_{g,F}$ has a negative value.

4. Specific Gravity ($S_g$)

The specific gravity ($S_g$) in each of the samples was obtained based on a mass ratio with respect to pure water having the same volume at 4 degrees Celsius.

5. Melting Time of Glass Raw Material

A melting time of a glass raw material refers to a time since 50g of a glass raw material is well mixed and put in a platinum crucible, and heating retention starts at a temperature of 1,150 to 1,250 degrees Celsius until the glass raw material is melted. In the present example, it was determined that the glass raw material was melted when an unmelted residue of the glass raw material could not be visually confirmed at a glass liquid level in the platinum crucible.

6. Liquid Phase Temperature

For a liquid phase temperature, about 0.1 g of glass was placed in a platinum plate with a hole, held for 18 minutes in a test furnace with a temperature gradient in 10°C increments, then taken out of the furnace, and naturally rapidly cooled, and presence or absence of devitrification was observed with a microscope with a magnification of 100 times. Note that, for a value of the liquid phase temperature, a temperature (°C) on a high temperature side on which devitrification does not occur is described.

Each table indicates compositions and physical properties in each example and each comparative example. Note that, a content amount of each component is expressed with mass% unless otherwise stated.

FIG. 5 is a graph in which an optical constant value of each example is plotted.

[Table 1]

|  |  | EXAMPLE 1 | EXAMPLE 2 | EXAMPLE 3 | EXAMPLE 4 |
|---|---|---|---|---|---|
|  | $SiO_2$ | 1.58 | 2.02 | 2.02 |  |
|  | $P_2O_5$ | 35.60 | 34.21 | 32.92 | 29.72 |
|  | $B_2O_3$ | 3.07 | 3.93 | 3.92 | 3.56 |
|  | $Li_2O$ |  |  |  |  |
|  | $Na_2O$ | 13.22 | 12.32 | 12.29 | 11.33 |
|  | $K_2O$ | 7.50 | 7.08 | 6.26 | 5.20 |
|  | BaO | 5.72 | 5.99 | 5.98 | 7.22 |
|  | ZnO | 1.23 | 0.78 | 0.78 |  |
|  | $Al_2O_3$ | 1.22 | 1.03 | 1.03 |  |
|  | $TiO_2$ | 18.03 | 16.24 | 18.20 | 14.55 |
|  | $Nb_2O_5$ | 12.76 | 16.34 | 16.30 | 28.37 |
|  | $ZrO_2$ |  |  |  |  |
|  | CaO |  |  |  |  |

(continued)

|  | EXAMPLE 1 | EXAMPLE 2 | EXAMPLE 3 | EXAMPLE 4 |
|---|---|---|---|---|
| $Y_2O_3$ |  |  |  |  |
| $La_2O_3$ |  |  |  |  |
| $Gd_2O_3$ |  |  |  |  |
| $WO_3$ |  |  |  |  |
| $Sb_2O_3$ | 0.07 | 0.06 | 0.30 | 0.05 |
| TOTAL | 100 | 100 | 100 | 100 |
| $P_2O_5+B_2O_3$ | 38.67 | 38.14 | 36.84 | 33.28 |
| $B_2O_3/P_2O_5$ | 0.086236 | 0.114879 | 0.119077 | 0.119785 |
| $TiO_2/P_2O_5$ | 0.506461 | 0.474715 | 0.552855 | 0.489569 |
| $Nb_2O_5/P_2O_5$ | 0.358427 | 0.477638 | 0.495140 | 0.954576 |
| $Li_2O+Na_2O+K_2O$ | 20.72 | 19.40 | 18.55 | 16.53 |
| $(TiO_2+Nb_2O_5)/P_2O_5$ | 0.86 | 0.95 | 1.05 | 1.44 |
| $K_2O/Na_2O$ | 0.567322 | 0.574675 | 0.509357 | 0.458959 |
| $n_d$ | 1.708975 | 1.715403 | 1.734510 | 1.781616 |
| $\nu_d$ | 26.37 | 26.46 | 25.20 | 23.58 |
| $P_{g,F}$ | 0.6251 | 0.6269 | 0.6288 | 0.6323 |
| $\Delta P_{G,F}$ | 0.0250 | 0.0270 | 0.0268 | 0.0275 |
| $S_g$ | 3.06 | 3.10 | 3.12 | 3.30 |
| LIQUID PHASE TEMPERATURE | LESS THAN 1010°C | LESS THAN 1010°C | 1030°C | LESS THAN 1010°C |
| MELTING TIME OF GLASS RAW MATERIAL | LESS THAN 15 MINUTES | LESS THAN 15 MINUTES | LESS THAN 15 MINUTES | LESS THAN 15 MINUTES |

[Table 2]

|  | EXAMPLE 5 | EXAMPLE 6 | EXAMPLE 7 | EXAMPLE 8 | EXAMPLE 9 |
|---|---|---|---|---|---|
| $SiO_2$ |  | 1.52 |  |  | 0.21 |
| $P_2O_5$ | 36.94 | 36.90 | 30.11 | 29.56 | 40.01 |
| $B_2O_3$ | 3.56 | 0.95 |  |  | 2.24 |
| $Li_2O$ |  |  | 2.59 | 2.86 |  |
| $Na_2O$ | 14.62 | 13.89 | 8.08 | 8.17 | 15.83 |
| $K_2O$ | 5.00 | 7.19 | 7.74 | 7.83 | 6.49 |
| BaO | 7.22 | 6.89 | 1.69 | 1.71 |  |
| ZnO |  | 1.18 | 0.35 | 0.35 | 0.50 |
| $Al_2O_3$ |  | 1.17 | 0.67 | 0.68 | 1.26 |
| $TiO_2$ | 24.87 | 19.20 | 9.14 | 9.24 | 15.10 |
| $Nb_2O_5$ | 7.74 | 10.81 | 36.79 | 37.21 | 9.59 |
| $ZrO_2$ |  |  | 0.97 |  |  |
| CaO |  |  |  |  | 8.77 |

(continued)

|  | EXAMPLE 5 | EXAMPLE 6 | EXAMPLE 7 | EXAMPLE 8 | EXAMPLE 9 |
|---|---|---|---|---|---|
| $Y_2O_3$ |  |  |  | 0.90 |  |
| $La_2O_3$ |  |  |  |  |  |
| $Gd_2O_3$ |  |  |  | 1.44 |  |
| $WO_3$ |  |  | 1.82 |  |  |
| $Sb_2O_3$ | 0.05 | 0.30 | 0.05 | 0.05 |  |
| TOTAL | 100 | 100 | 100 | 100 | 100 |
| $P_2O_5+B_2O_3$ | 40.50 | 37.85 | 30.11 | 29.56 | 42.25 |
| $B_2O_3/P_2O_5$ | 0.096372 | 0.025745 | 0 | 0 | 0.055986 |
| $TiO_2/P_2O_5$ | 0.673254 | 0.520325 | 0.303554 | 0.312585 | 0.377406 |
| $Nb_2O_5/P_2O_5$ | 0.209529 | 0.292954 | 1.221853 | 1.258796 | 0.239690 |
| $Li_2O+Na_2O+K_2O$ | 19.62 | 21.08 | 18.41 | 18.86 | 22.32 |
| $(TiO_2+Nb_2O_5)/ P_2O_5$ | 0.88 | 0.81 | 1.53 | 1.57 | 0.62 |
| $K_2O/Na_2O$ | 0.341997 | 0.517639 | 0.957921 | 0.958384 | 0.409981 |
| $n_d$ | 1.735120 | 1.711032 | 1.793388 | 1.789582 | 1.663389 |
| $\nu_d$ | 24.22 | 25.90 | 23.58 | 23.98 | 31.28 |
| $P_{g,F}$ | 0.6350 | 0.6302 | 0.6301 | 0.6295 | 0.6110 |
| $\Delta P_{G,F}$ | 0.0313 | 0.0293 | 0.0253 | 0.0254 | 0.0191 |
| $S_g$ | 3.07 | 3.08 | 3.32 | 3.32 | 2.90 |
| LIQUID PHASE TEMPERATURE | 1040°C | 1030°C | LESS THAN 1010°C | LESS THAN 1010°C | LESS THAN 1010°C |
| MELTING TIME OF GLASS RAW MATERIAL | LESS THAN 15 MINUTES | LESS THAN 15 MINUTES | LESS THAN 15 MINUTES | LESS THAN 15 MINUTES | LESS THAN 15 MINUTES |

[Table 3]

|  | COMPARATIVE EXAMPLE 1 | COMPARATIVE EXAMPLE 2 | COMPARATIVE EXAMPLE 3 | COMPARATIVE EXAMPLE 4 |
|---|---|---|---|---|
| $SiO_2$ | 2.02 | 2.02 |  |  |
| $P_2O_5$ | 24.20 | 24.21 | 26.73 | 25.83 |
| $B_2O_3$ | 3.93 | 3.93 |  |  |
| $Li_2O$ |  |  |  |  |
| $Na_2O$ | 12.32 | 12.32 | 6.81 | 6.38 |
| $K_2O$ | 7.08 | 7.08 | 7.39 | 7.45 |
| BaO | 5.99 | 5.99 |  |  |
| ZnO | 0.78 | 0.78 | 5.10 | 5.14 |
| $Al_2O_3$ | 1.03 | 1.03 | 8.44 | 9.30 |
| $TiO_2$ | 26.25 | 21.25 | 9.05 | 9.13 |
| $Nb_2O_5$ | 16.34 | 21.33 | 36.44 | 36.73 |
| $ZrO_2$ |  |  |  |  |

(continued)

| | COMPARATIVE EXAMPLE 1 | COMPARATIVE EXAMPLE 2 | COMPARATIVE EXAMPLE 3 | COMPARATIVE EXAMPLE 4 |
|---|---|---|---|---|
| MgO | | | | |
| CaO | | | | |
| $Y_2O_3$ | | | | |
| $La_2O_3$ | | | | |
| $Gd_2O_3$ | | | | |
| $WO_3$ | | | | |
| $Sb_2O_3$ | 0.06 | 0.06 | 0.04 | 0.04 |
| TOTAL | 100 | 100 | 100 | 100 |
| $P_2O_5+B_2O_3$ | 28.13 | 28.14 | 26.73 | 25.83 |
| $B_2O_3/P_2O_5$ | 0.162397 | 0.162330 | 0 | 0 |
| $TiO_2/P_2O_5$ | 1.084711 | 0.877736 | 0.338571 | 0.353465 |
| $Nb_2O_5/P_2O_5$ | 0.675207 | 0.881041 | 1.363262 | 1.421990 |
| $Li_2O+Na_2O+K_2O$ | 19.40 | 19.40 | 14.20 | 13.83 |
| $(TiO_2+Nb_2O_5)/P_2O_5$ | 1.76 | 1.76 | 1.70 | 1.78 |
| $K_2O/Na_2O$ | 0.574675 | 0.574675 | 1.085169 | 1.167712 |
| $n_d$ | UNMEASURABLE | UNMEASURABLE | UNMEASURABLE | UNMEASURABLE |
| $\nu_d$ | UNMEASURABLE | UNMEASURABLE | UNMEASURABLE | UNMEASURABLE |
| $P_{g,F}$ | UNMEASURABLE | UNMEASURABLE | UNMEASURABLE | UNMEASURABLE |
| $\Delta P_{G,F}$ | UNMEASURABLE | UNMEASURABLE | UNMEASURABLE | UNMEASURABLE |
| $S_g$ | UNMEASURABLE | UNMEASURABLE | UNMEASURABLE | UNMEASURABLE |
| LIQUID PHASE TEMPERATURE | UNMEASURABLE | UNMEASURABLE | UNMEASURABLE | UNMEASURABLE |
| MELTING TIME OF GLASS RAW MATERIAL | LESS THAN 15 MINUTES | LESS THAN 15 MINUTES | 30 MINUTES OR MORE | 30 MINUTES OR MORE |

[Table 4]

| | COMPARATIVE EXAMPLE 5 | COMPARATIVE EXAMPLE 6 |
|---|---|---|
| $SiO_2$ | | |
| $P_2O_5$ | 25.08 | 25.05 |
| $B_2O_3$ | 1.59 | 6.76 |
| $Li_2O$ | | |
| $Na_2O$ | 6.35 | 7.02 |
| $K_2O$ | | 7.88 |
| BaO | 1.59 | 8.03 |
| ZnO | | |
| $Al_2O_3$ | | 0.86 |
| $TiO_2$ | 16.72 | 15.02 |

(continued)

|  | COMPARATIVE EXAMPLE 5 | COMPARATIVE EXAMPLE 6 |
|---|---|---|
| $Nb_2O_5$ | 41.80 | 29.32 |
| $ZrO_2$ | | |
| $MgO$ | | |
| $CaO$ | | |
| $Y_2O_3$ | | |
| $La_2O_3$ | | |
| $Gd_2O_3$ | 3.70 | |
| $WO_3$ | 3.17 | |
| $Sb_2O_3$ | | 0.06 |
| TOTAL | 100 | 100 |
| $P_2O_5+B_2O_3$ | 26.67 | 31.81 |
| $B_2O_3/P_2O_5$ | 0.063397 | 0.269860 |
| $TiO_2/P_2O_5$ | 0.666667 | 0.599601 |
| $Nb_2O_5/P_2O_5$ | 1.666667 | 1.170459 |
| $Li_2O+Na_2O+K_2O$ | 6.35 | 14.9 |
| $(TiO_2+Nb_2O_5)/P_2O_5$ | 2.33 | 1.77 |
| $K_2O/Na_2O$ | 0.000000 | 1.22507 |
| $n_d$ | UNMEASURABLE | 1.80231 |
| $\nu_d$ | UNMEASURABLE | 22.68 |
| $P_{g,F}$ | UNMEASURABLE | 0.6366 |
| $\Delta P_{G,F}$ | UNMEASURABLE | 0.0304 |
| $S_g$ | 3.66 | 3.31 |
| LIQUID PHASE TEMPERATURE | EXCEEDING 1100°C | 1060°C |
| MELTING TIME OF GLASS RAW MATERIAL | LESS THAN 15 MINUTES | LESS THAN 15 MINUTES |

It was confirmed that the optical glasses in Examples were highly dispersive, had a low specific gravity, had a low liquid phase temperature of 1,050 degrees Celsius or lower, and had great $\Delta P_{g,F}$ and $P_{g,F}$ values. It was confirmed that a melting time of a glass raw material was short during glass production, and thus production efficiency was excellent. Note that, in First to Fourth Comparative Examples, various physical properties were unmeasurable due to devitrification. In Fifth Comparative Example, glass was colored in dark blackish brown, and thus an optical constant was unmeasurable.

Reference Signs List

| | |
|---|---|
| 1 | Imaging device |
| 101 | Camera body |
| 102 | Lens barrel |
| 103 | Lens |
| 104 | Sensor chip |
| 105 | Glass substrate |
| 106 | Multi-chip module |
| 2 | Multi-photon microscope |
| 201 | Pulse laser device |

| 202 | Pulse division device |
|---|---|
| 203 | Beam adjustment unit |
| 204, 205, 212 | Dichroic mirror |
| 206 | Objective lens |
| 207, 211, 213 | Fluorescence detection unit |
| 208 | Condensing lens |
| 209 | Pinhole |
| 210 | Image forming lens |
| S | Sample |
| CAM | Imaging device |
| WL | Photographing lens |
| EF | Auxiliary light emitting unit |
| LM | Liquid crystal monitor |
| B1 | Release button |
| B2 | Function button |

**Claims**

1. An optical glass comprising:

   by mass%,

   27 to 41% of a $P_2O_5$ component;
   7 to 17% of a $Na_2O$ component;
   5 to 10% of a $K_2O$ component;
   8 to 26% of a $TiO_2$ component; and
   5 to 39% of a $Nb_2O_5$ component, wherein

   a partial dispersion ratio ($P_{g,F}$) is equal to or less than 0.635.

2. The optical glass according to claim 1, further comprising:
   by mass%,

   0 to 3% of a $SiO_2$ component;
   0 to less than 4% of a $B_2O_3$ component;
   0 to 3% of an $Al_2O_3$ component;
   0 to 3.5% of a $Li_2O$ component;
   0 to 9.5% of a CaO component;
   0 to 9% of a BaO component;
   0 to 3% of a ZnO component;
   0 to 3% of a $ZrO_2$ component;
   0 to 3% of a $Y_2O_3$ component;
   0 to 3% of a $Gd_2O_3$ component;
   0 to 3% of a $WO_3$ component; and
   0 to 0.4% of a $Sb_2O_3$ component.

3. The optical glass according to claim 1 or 2, wherein,
   by mass%, a sum of content amounts of the $P_2O_5$ component and the $B_2O_3$ component is 28 to 44%.

4. The optical glass according to any one of claims 1 to 3, wherein,
   by mass%, a ratio of the $B_2O_3$ component to the $P_2O_5$ component ($B_2O_3/P_2O_5$) is 0 to less than 0.15.

5. The optical glass according to any one of claims 1 to 4, wherein,
   by mass%, a ratio of the $TiO_2$ component to the $P_2O_5$ component ($TiO_2/P_2O_5$) is 0.28 to 0.7.

6. The optical glass according to any one of claims 1 to 5, wherein,
   by mass%, a ratio of the $Nb_2O_5$ component to the $P_2O_5$ component ($Nb_2O_5/P_2O_5$) is 0.18 to 1.3.

7. The optical glass according to any one of claims 1 to 6, wherein, by mass%, a sum of content amounts of the $Li_2O$ component, the $Na_2O$ component, and the $K_2O$ component is 15 to 26%.

8. The optical glass according to any one of claims 1 to 7, wherein, by mass%, a ratio of a sum of content amounts of the $TiO_2$ component and the $Nb_2O_5$ component to the $P_2O_5$ component ($TiO_2 + Nb_2O_5/P_2O_5$) is 0.5 to 2.0.

9. The optical glass according to any one of claims 1 to 8, wherein, by mass%, a ratio of the $K_2O$ component to the $Na_2O$ component ($K_2O/Na_2O$) is 0.3 to 1.1.

10. The optical glass according to any one of claims 1 to 9, wherein

    a refractive index ($n_d$) with respect to a d-line falls within a range from 1.66 to 1.80, and
    an abbe number ($\nu_d$) falls within a range from 22 to 32.

11. The optical glass according to any one of claims 1 to 10, wherein specific gravity ($S_g$) is from 2.8 to 3.4.

12. The optical glass according to any one of claims 1 to 11, wherein a value ($\Delta P_{g,F}$) indicating abnormal dispersibility is 0.0180 to 0.0320.

13. The optical glass according to any one of claims 1 to 12, wherein time until 50g of a raw material of the optical glass is melted when the raw material is heated at a temperature of 1,100 to 1,250 degrees Celsius is less than 15 minutes.

14. The optical glass according to any one of claims 1 to 13, wherein a liquid phase temperature is equal to or less than 1,050 degrees Celsius.

15. An optical element using the optical glass according to any one of claims 1 to 14.

16. An optical system comprising the optical element according to claim 15.

17. An interchangeable lens comprising the optical system according to claim 16.

18. An optical device comprising the optical system according to claim 16.

FIG. 1

FIG. 2

FIG. 3

FIG. 4

FIG. 5

## INTERNATIONAL SEARCH REPORT

| International application No. |
| --- |
| PCT/JP2019/039991 |

### A. CLASSIFICATION OF SUBJECT MATTER
Int.Cl. C03C3/21(2006.01)i, C03C3/062(2006.01)i, C03C3/064(2006.01)i, C03C3/066(2006.01)i, G02B1/00(2006.01)i

According to International Patent Classification (IPC) or to both national classification and IPC

### B. FIELDS SEARCHED
Minimum documentation searched (classification system followed by classification symbols)
Int.Cl. C03C3/21, C03C3/062, C03C3/064, C03C3/066, G02B1/00

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2019-1675 A (HIKARI GLASS CO., LTD.) 10 January 2019, paragraphs [0001], [0002], [0014], [0047]-[0069], examples 22-24 <br> & WO 2018/230220 A1 | 1, 3, 5-18 |
| X | JP 2014-185075 A (HOYA CORPORATION) 02 October 2014, paragraphs [0001], [0007], [0037]-[0041], examples 2-5 <br> & US 2015/0368151 A1, paragraphs [0002], [0016], [0017], [0179]-[0187], table 3, examples 2-2 to 2-5 & WO 2014/129510 A1 & TW 201500318 A & CN 104981439 A & KR 10-2015-0120346 A & CN 108178509 A | 1-9, 11-18 |

☒ Further documents are listed in the continuation of Box C.    ☐ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | |
| "O" | document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" document member of the same patent family |

| Date of the actual completion of the international search | Date of mailing of the international search report |
| --- | --- |
| 02.12.2019 | 10.12.2019 |

| Name and mailing address of the ISA/ <br> Japan Patent Office <br> 3-4-3, Kasumigaseki, Chiyoda-ku, <br> Tokyo 100-8915, Japan | Authorized officer <br> <br> Telephone No. |
| --- | --- |

Form PCT/ISA/210 (second sheet) (January 2015)

**INTERNATIONAL SEARCH REPORT**

| International application No. |
| --- |
| PCT/JP2019/039991 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2014-159343 A (HOYA CORPORATION) 04 September 2014, entire text<br>& US 2015/0368151 A1, entire text & WO 2014/129510 A1 & TW 201500318 A & CN 104981439 A & KR 10-2015-0120346 A & CN 108178509 A | 1-18 |
| A | WO 2017/006998 A1 (HOYA CORPORATION) 12 January 2017, entire text<br>& CN 107614449 A & TW 201710205 A & TW 201730127 A | 1-18 |
| A | WO 2013/031385 A1 (KONICA MINOLTA ADVANCED LAYERS INC.) 07 March 2013, entire text, all drawings<br>& US 2014/0228197 A1, entire text, all drawings | 1-18 |
| A | JP 2003-238197 A (FUJI PHOTO OPTICAL CO., LTD.) 27 August 2003, example 8<br>(Family: none) | 1-18 |

Form PCT/ISA/210 (continuation of second sheet) (January 2015)

**REFERENCES CITED IN THE DESCRIPTION**

**Patent documents cited in the description**

- JP 2019049677 A

- JP 2011144064 A